# EUROPÄISCHE PATENTSCHRIFT

(11) **EP 3 724 387 B1**
(45) Veröffentlichungstag und Bekanntmachung des Hinweises auf die Patenterteilung: **30.03.2022**
(21) Anmeldenummer: 18785572.1
(22) Anmeldetag: 08.10.2018
(51) Int. Cl.: D02G 3/48, B29B 15/12, B29D 30/38

(54) **VERFAHREN ZUR HERSTELLUNG EINES FESTIGKEITSTRÄGERS ZUR VERSTÄRKUNG VON GUMMIPRODUKTEN**
METHOD FOR PRODUCING A REINFORCING SUPPORT FOR REINFORCING RUBBER PRODUCTS
PROCÉDÉ DE FABRICATION D'UN RENFORCEMENT DESTINÉ À RENFORCER DES PRODUITS EN CAOUTCHOUC

(30) Priorität: 15.12.2017 DE 102017222894
(43) Veröffentlichungstag der Anmeldung: 21.10.2020
(73) Patentinhaber: Continental Reifen Deutschland GmbH, 30165 Hannover (DE)
(72) Erfinder: ENGMANN, Sarah, 30149 Hannover (DE); KRAMER, Thomas, 30149 Hannover (DE)
(74) Vertreter: Continental Corporation
(86) Internationale Anmeldenummer: PCT/EP2018/077243
(87) Internationale Veröffentlichungsnummer: WO 2019/115051

(56) Entgegenhaltungen:
- WO-A1-2013/178538
- JP-A- 2002 127 710

## Beschreibung

Die Erfindung betrifft ein Verfahren zur Herstellung eines Festigkeitsträgers, der Filamente aus Poly(p-phenylen-2,6-benzobisoxazol) enthält, zur Verstärkung von Gummiprodukten. Ferner betrifft die Erfindung den nach dem Verfahren hergestellten Festigkeitsträger und dessen Verwendung zur Verstärkung von Gummiprodukten, insbesondere Fahrzeugreifen.

Eine Vielzahl von Gummiprodukten, wie z. B. Reifen, ist mit Festigkeitsträgern verstärkt. Zum Einsatz können dabei metallische, mineralische oder textile Festigkeitsträger kommen. Kommen Gummimischung und Festigkeitsträger in Kontakt, z. B. während der Vulkanisation, so bildet sich ohne vorherige spezielle Behandlung der Festigkeitsträger in der Regel keine ausreichend beanspruchbare Haftung zwischen Gummi und Festigkeitsträger aus. So kann es dann bei dem Einsatz des Gummiproduktes, insbesondere unter dynamischer Belastung, zu einer Trennung der einzelnen Bauteile und damit zu einem Produktausfall kommen.

Aus dem Stand der Technik ist es daher bekannt, die Festigkeitsträger vor der Gummierung für eine ausreichende Haftung zu aktivieren (Haftungsaktivierung), wobei üblicherweise sogenannte RFL-Dips (Resorcin-Formaldehyd-Latex-Dips) verwendet werden, durch die die Festigkeitsträger getaucht werden.

Ferner werden u.a. geblockte Isocyanat- und/oder Epoxy-Verbindungen in Kombination mit RFL-Dips eingesetzt, um die Festigkeitsträger weiter zu aktivieren. Die WO 2005/026239 A1 offenbart beispielsweise die Verwendung von Polyisocyanaten und RFL ohne Epoxy-Verbindungen.

Zur Verstärkung von Gummiprodukten mit Festigkeitsträgern hoher Festigkeit werden z. B. metallische Festigkeitsträger oder Festigkeitsträger aus aromatischen Polyamiden, beispielsweise p-Aramid, oder anderen hochmoduligen Garnen eingesetzt.

Unter dem Begriff "hochmoduliges Garn" ist dabei ein Garn zu verstehen, welches aus einem hochmoduligen Material besteht. Unter dem Begriff "niedermoduliges Garn" ist dabei ein Garn zu verstehen, welches aus einem niedermoduligen Material besteht.

Die Einordnung der Garne in "niedermodulig" und "hochmodulig" erfolgt gemäß der nachfolgenden Tabelle 1. Es ist die Kraft bestimmt, die jeweils auf ein Garn bei 1 % Dehnung und bei 2 % Dehnung aufgebracht werden muss, normiert auf die Garnfeinheit in tex. Ermittelt wird nach ASTM D885.

**Tabelle 1**

| Garn / Dehnung | 1 % | 2% |
|---|---|---|
| niedermodulig | < 150 mN/tex | < 200 mN/tex |
| hochmodulig | > 300 mN/tex | > 500 mN/tex |

Zu den sogenannten hochmoduligen Garnen zählen auch Garne, die Filamente aus Poly(p-phenylen-2,6-benzobisoxazol) aufweisen. Garne aus Poly(p-phenylen-2,6-benzobisoxazol), auch kurz PBO genannt, zeichnen sich durch eine deutlich höhere Reißfestigkeit und einen deutlich höheren Elastizitätsmodul aus als entsprechende Garne aus Aramid.

Bei der Verstärkung von Gummiprodukten mit Festigkeitsträgern auf der Basis von Poly(p-phenylen-2,6-benzobisoxazol) ergibt sich allerdings das Problem, dass das weitestgehend inerte Poly(p-phenylen-2,6-benzobisoxazol) nicht mit Standard-Haftsystemem, wie einem Vordip auf der Basis von Isocyanaten und einem anschließenden RFL-Dip (Resorcin-Formaldehyd-Latex-Dip), zu einer ausreichenden Haftung an das angrenzende Gummimaterial gebracht werden kann.

Um die Haftung von Festigkeitsträgern auf der Basis von Poly(p-phenylen-2,6-benzobisoxazol) zu Gummi zu verbessern, ist es bereits aus der US 6,824,871 B2 bekannt, die Festigkeitsträger mit einem mehrschichtigen Haftsystem zu versehen, wobei die erste Beschichtung aus einer Mischung aus einem aliphatischen Polyglycidylether und einem Vinylpyridin-Styrol-Butadien-Latex basiert und die zweite Beschichtung ein konventioneller RFL-Dip ist. Optional kann der Festigkeitsträger vor der ersten Beschichtung einer Plasmabehandlung unterworfen werden.

Aus der JP 2002 127710 A ist es bekannt, Festigkeitsträger aus Poly(p-phenylen-2,6-benzobisoxazol) vor einem RFL-Dip einer Plasmabehandlung zu unterwerfen. WO 2013/178538 A betrifft ein Verfahren zum Behandeln eines textilen Verstärkungselementes mit Plasma, bei dem das textile Verstärkungselement bei Atmosphärendruck einem mit einem Plasmabrenner erzeugten Plasmastrom aus einem mindestens eine oxidierende Komponente enthaltenden Gas ausgesetzt wird.

Aus der EP 2 431 195 A2 ist es ferner bekannt, auf den Festigkeitsträgern zur Verstärkung von Reifen vor der Einbringung in das Gummimaterial ein polymerisierbares Polymer, welches mit Hilfe eines Plasmas erzeugt wurde, abzuscheiden. Bei den Festigkeitsträgern kann es sich um solche aus Poly(p-phenylen-2,6-benzobisoxazol) handeln.

Der vorliegenden Erfindung liegt die Aufgabe zugrunde, ein Verfahren zur Herstellung eines Festigkeitsträgers, der Filamente aus Poly(p-phenylen-2,6-benzobisoxazol) enthält, bereitzustellen, das einfach durchzuführen ist und bei Einsatz der nach dem Verfahren hergestellten Festigkeitsträger zur Verstärkung von Gummiprodukten zu einer ausreichenden Haftung führt.

Gelöst wird die Aufgabe erfindungsgemäß durch ein Verfahren mit zumindest folgenden Schritten :
a) Bereitstellen eines Festigkeitsträgers, der Filamente aus Poly(p-phenylen-2,6-benzobisoxazol) enthält, in Form eines endlosen Einzelgarnes oder Einzelcordes,
b) Hindurchführen des Festigkeitsträgers durch ein Atmosphärendruckplasma mit Luft als Prozessgas bei einer Spannung bis zu 15 kV und einer Frequenz bis zu 100 kHz zur Aktivierung der Oberfläche der Filamente aus Poly(p-phenylen-2,6-benzobisoxazol),
c) maximal 40 s nach der Plasmabehandlung direktes Hindurchführen des Festigkeitsträgers durch ein Tauchbad mit einem RFL-Dip (Resorcin-Formaldehyd-Latex-Dip),
d) Herausführen des Festigkeitsträgers aus dem Tauchbad,
e) Weiterführen des Festigkeitsträgers durch eine Trocknungsvorrichtung,
f) Weiterführen des Festigkeitsträgers durch eine Ausheizvorrichtung zur Reaktion der reaktiven Oberfläche der Filamente aus Poly(p-phenylen-2,6-benzobisoxazol) mit dem RFL-Dip.

Das Verfahren lässt sich einfach durchführen, da zum einen nur ein Atmosphärendruckplasma mit Luft als Prozessgas zum Einsatz kommt und zum anderen kein weiterer Vordip, z. B. ein Dip auf der Basis von Isocyanaten, vorgesehen ist. Der Festigkeitsträger durchläuft nach der Plasmabehandlung nur ein einziges Tauchbad mit einem üblichen RFL-Dip. Durch diesen Ablauf lässt sich das Verfahren auch sehr kostengünstig durchführen. Überraschenderweise hat sich gezeigt, dass nach diesem Verfahren erzeugte Festigkeitsträger bei Verwendung zur Verstärkung von Gummiprodukten eine gute Haftung zwischen Gummi und Festigkeitsträger aufweisen. Dabei ist es wichtig, das zwischen der Plasmabehandlung und dem Tauchbad mit einem RFL-Dip nicht mehr als 40 s vergehen. Auf diese Weise wird eine besonders große Anzahl an reaktiven Gruppen auf der Oberfläche des Festigkeitsträgers vor dem Einführen in das Tauchbad gewährleistet, , die eine Anbindung an den RFL-Dip ermöglichen. Lässt man mehr Zeit verstreichen, kann diese Anbindung vermutlich nicht mehr in ausreichendem Maße erfolgen.

Erst eine gute Haftung ermöglicht den Einsatz als Verstärkungsmaterial in Gummiprodukten, insbesondere als Verstärkungsmaterial in Fahrzeugreifen. Bei Fahrzeugreifen erzielt man auf diese Weise eine größere strukturelle Haltbarkeit.

Um das Verfahren kostengünstig zu gestalten, hat es sich als vorteilhaft erwiesen, wenn die Trocknung und das Ausheizen kontinuierlich, beispielsweise in Durchlauföfen, durchgeführt werden.

Vorzugsweise finden die Trocknung und das Ausheizen bei Temperaturen von 100 bis 260 °C statt, um das Verfahren zu beschleunigen.

Mit dem erfindungsgemäßen Verfahren werden Festigkeitsträger erzeugt, die Filamente aus Poly(p-phenylen-2,6-benzobisoxazol) enthalten. Dabei kann es sich z. B. um Monofile oder Garne aus Monofilen handeln. Vorzugsweise handelt es sich bei dem Festigkeitsträger um einen Cord aus Poly(p-phenylen-2,6-benzobisoxazol) oder um einen Hybridcord, enthaltend zumindest ein Garn aus Poly(p-phenylen-2,6-benzobisoxazol). Diese können mit dem Verfahren einfach hergestellt werden und ermöglichen den Einsatz zur Verstärkung von Gummiprodukten mit ausreichender Gummi-Festigkeitsträger-Haftung.

Bei den Hybridcorden kann es sich um Corde aus Poly(p-phenylen-2,6-benzobisoxazol)-Garn als hochmoduligem Material und einem niedermoduligen Garn, wie z. B. aus einem Polyamid oder einem Polyester handeln. Bei den Polyamiden (PA) kann es sich um die Polyamide PA 4.6, PA 6, PA 6.6, PA 10.10, PA 4.10, PA 11 und/oder PA12, bevorzugt um PA 6.6 oder PA 10.10, handeln. Bei den Polyestern kann es sich um die Polyester Polyethylennaphthalat (PEN), Polyethylenfuranoat (PEF), Polybutylenterephthalat (PBT), Polybutylennaphthalat (PBN), Polypropylenterephthalat (PPT), Polypropylennaphthalat (PPN), Polyethylenterephthalat (PET), High-Modulus Low-Shrinkage-PET (HMLS-PET), insbesondere um thermoplastische Polyester und/oder vernetzte ungesättigte Polyester handeln. Auch Hybridcorde aus Poly(p-phenylen-2,6-benzobisoxazol)-Garn und Garnen aus p-Aramid oder m-Aramid sind einsetzbar.

Die nach dem erfindungsgemäßen Verfahren hergestellten Festigkeitsträger können zur Verstärkung unterschiedlichster Gummiprodukte, wie Fahrzeugreifen, Fördergurten, Antriebsriemen oder Luftfedern, eingesetzt werden, insbesondere in den Bereichen, in denen üblicherweise Mehrlagencorde eingesetzt werden und der Einsatz von bronze- /kupferbeschichteten Corden aus Haftungsgründen nicht möglich ist.

Als besonders vorteilhaft hat sich der Einsatz der Festigkeitsträger als Gürtelbandage von Fahrzeugluftreifen erwiesen. Die Festigkeitsträger, die Filamente aus Poly(p-phenylen-2,6-benzobisoxazol) enthalten, zeichnen sich durch eine hohe Festigkeit aus und verhindern beim Hochgeschwindigkeitseinsatz eine Erhebung des Reifens durch die im Fahrbetrieb auftretenden Fliehkräfte. Eine gute Haftung zwischen Gummi und Festigkeitsträger ist vorhanden.

Vorzugsweise ist der Festigkeitsträger für die Gürtelbandage ein Hybridcord aus einem Poly(p-phenylen-2,6-benzobisoxazol)-Garn und einem Garn aus einem niedermoduligen Material, wie z. B. Nylon. Mit diesen Corden kann bei der Reifenherstellung eine ausreichende Erhebung bei der Bombage und in der Vulkanisationsform gewährleistet werden und damit der Reifen präzise ausgeformt werden, und nach der Fertigstellung des Reifens ist im Fahrbetrieb eine gute Hochgeschwindigkeitstauglichkeit vorhanden.

Anhand eines Ausführungsbeispiels soll die Erfindung näher erläutert werden.

Ein Cord aus Poly(p-phenylen-2,6-benzobisoxazol) der Konstruktion 1640x1x2 mit einer Vorverdrehung der Garne von 300 tpm (turns per meter) und einer Endverdrehung des Cordes von 300 tpm wurde in Form eines endlosen Einzelcordes durch ein Atmosphärendruckplasma mit Luft als Prozessgas kontinuierlich geführt. Die Erzeugung des Plasmas erfolgte mit einem MonoJet der Firma Advanced Machines, Schweiz (Leistung: 200 bis 2000 W) bei einer Leistungseinstellung von 60 % und einer Strömungsgeschwindigkeit von 30 L/min. Dadurch wurde die Oberfläche der einzelnen Filamente der Garne des Cordes aktiviert. Der Cord wurde kontinuierlich weitergeführt und gelangte nach ca. 5 s in ein Tauchbad aus einem üblichen RFL-Dip. Nach dem Herausführen aus dem Tauchbad wurde der Cord zunächst zur Trocknung durch einen Trocknungsofen bei einer Temperatur von 130 °C kontinuierlich geführt. Anschließend wurde der Cord durch einen weiteren Ofen als Ausheizvorrichtung zur Reaktion der reaktiven Oberfläche mit dem RFL-Dip kontinuierlich geführt. Dieser zweite wies eine Temperatur von 210 °C auf.

Die auf diese Weise erzeugten Corde (Cord A) und Corde (Cord B), bei denen keine Plasmabehandlung, sondern nur ein Dippen mit RFL-Dip und anschließendes Trocknen und Ausheizen erfolgte, wurden hinsichtlich der Haftkraft und der Bedeckung untersucht. Es wurden Haftungstest mit einer üblichen Gummierungsmischung für textile Festigkeitsträger gemäß ISO 36:2011 durchgeführt. Die vulkanisierten Proben wurden für 30 min auf 120 °C erhitzt und der Haftungstest innerhalb von 30 Sekunden nach Herausnahme aus dem Ofen durchgeführt. Die Bewertung der Haftkraft wurde gemäß DIN ISO 6133 durchgeführt. Zudem wurde der Trennfläche auf einer Skala von 1 bis 5 im Hinblick auf die Bedeckung mit Gummierungsmischung bewertet. Diese Bewertung erfolgte durch visuelle Kontrolle gemäß ASTM D4393. Für jedes Beispiel stellen die angegebene Haftkraft und die angegebene Bedeckung den Mittelwert aus jeweils drei Messungen dar. Die Ergebnisse sind in Tabelle 2 dargestellt.

**Tabelle 2**

| | Cord A (mit Plasmabehandlung) | Cord B (ohne Plasmabehandlung) |
|---|---|---|
| Haftkraft [N/25 mm] | 200 | 110 |
| Bedeckung | 4,0 | 1,0 |

Aus der Tabelle 2 wird ersichtlich, dass nur der nach dem erfindungsgemäßen Verfahren hergestellte Cord mit der Plasmabehandlung unmittelbar vor dem Tauchbad mit dem RFL-Dip zu einer guten Haftung bei einer guten Bedeckung führt. Derartige Corde eignen sich daher für die Verstärkung von Gummiprodukten, da eine Haltbarkeit des Produktes durch die Cord-Gummi-Haftung gewährleistet ist.

## Patentansprüche

1. Verfahren zur Herstellung eines Festigkeitsträgers, der Filamente aus Poly(p-phenylen-2,6-benzobisoxazol) enthält, zur Verstärkung von Gummiprodukten mit zumindest folgenden Schritten :
a) Bereitstellen eines Festigkeitsträgers, der Filamente aus Poly(p-phenylen-2,6-benzobisoxazol) enthält, in Form eines endlosen Einzelgarnes oder Einzelcordes,
b) Hindurchführen des Festigkeitsträgers durch ein Atmosphärendruckplasma mit Luft als Prozessgas bei einer Spannung bis zu 15 kV und einer Frequenz bis zu 100 kHz zur Aktivierung der Oberfläche der Filamente aus Poly(p-phenylen-2,6-benzobisoxazol),
c) maximal 40 s nach der Plasmabehandlung direktes Hindurchführen des Festigkeitsträgers durch ein Tauchbad mit einem RFL-Dip (Resorcin-Formaldehyd-Latex-Dip),
d) Herausführen des Festigkeitsträgers aus dem Tauchbad,
e) Weiterführen des Festigkeitsträgers durch eine Trocknungsvorrichtung,
f) Weiterführen des Festigkeitsträgers durch eine Ausheizvorrichtung zur Reaktion der reaktiven Oberfläche der Filamente aus Poly(p-phenylen-2,6-benzobisoxazol) mit dem RFL-Dip.

2. Verfahren nach Anspruch 1, **dadurch gekennzeichnet, dass** die Trocknung und das Ausheizen kontinuierlich durchgeführt werden.

3. Verfahren nach zumindest einem der vorhergehenden Ansprüche, **dadurch gekennzeichnet, dass** die Trocknung und das Ausheizen bei Temperaturen von 100 bis 260 °C durchgeführt werden.

4. Verfahren nach zumindest einem der vorhergehenden Ansprüche, **dadurch gekennzeichnet, dass** der Festigkeitsträger ein Cord aus Poly(p-phenylen-2,6-benzobisoxazol) oder ein Hybridcord, enthaltend zumindest ein Garn aus Poly(p-phenylen-2,6-benzobisoxazol), ist.

## Claims

1. Process for producing a strength member which contains filaments of poly(p-phenylene-2,6-benzobisoxazole) for reinforcing rubber products comprising at least the steps of:
a) providing a strength member which contains filaments of poly(p-phenylene-2,6-benzobisoxazole) in the form of a continuous individual yarn or individual cord,
b) passing the strength member through an atmospheric pressure plasma with air as the process gas at a voltage up to 15 kV and a frequency up to 100 kHz to activate the surface of the filaments of poly(p-phenylene-2,6-benzobisoxazole),
c) not more than 40 seconds after the plasma treatment directly passing the strength member through an immersion bath comprising an RFL dip (resorcinol-formaldehyde-latex dip),
d) passing the strength member out of the immersion bath,
e) passing the strength member onwards through a drying apparatus,
f) passing the strength member onwards through a baking apparatus to react the reactive surface of the filaments of poly(p-phenylene-2,6-benzobisoxazole) with the RFL dip.

2. Process according to Claim 1, **characterized in that** the drying and the baking are performed in continuous fashion.

3. Process according to at least one of the preceding claims, **characterized in that** the drying and the baking are performed at temperatures of 100°C to 260°C.

4. Process according to at least one of the preceding claims, **characterized in that** the strength member is a cord of poly(p-phenylene-2,6-benzobisoxazole) or a hybrid cord containing at least one yarn of poly(p-phenylene-2,6-benzobisoxazole).

## Revendications

1. Procédé pour la fabrication d'un support de renforcement qui contient des filaments de poly(p-phénylène-2,6-benzobisoxazole), pour le renforcement de produits de caoutchouc comportant au moins les étapes suivantes :
a) mise à disposition d'un support de renforcement qui contient des filaments de poly(p-phénylène-2,6-benzobisoxazole), sous forme d'un fil unique ou d'un cordon unique sans fin,
b) passage du support de renforcement par un plasma à pression atmosphérique avec de l'air en tant que gaz de procédé à une tension allant jusqu'à 15 kV et une fréquence jusqu'à 100 kHz pour l'activation de la surface des filaments de poly(p-phénylène-2,6-benzobisoxazole),
c) au maximum 40 s après le traitement par plasma, passage direct du support de renforcement par un bain d'immersion comportant un bain de RFL (bain de latex de résorcinol-formaldéhyde),
d) retrait du support de renforcement du bain d'immersion,
e) conduite ultérieure du support de renforcement par un dispositif de séchage,
f) conduite ultérieure du support de renforcement par un dispositif d'étuvage pour la réaction de la surface réactive des filaments de poly(p-phénylène-2,6-benzobisoxazole) avec le bain de RFL.

2. Procédé selon la revendication 1, **caractérisé en ce que** le séchage et l'étuvage sont réalisés de manière continue.

3. Procédé selon au moins l'une des revendications précédentes, **caractérisé en ce que** le séchage et l'étuvage sont réalisés à des températures de 100 à 260 °C.

4. Procédé selon au moins l'une des revendications précédentes, **caractérisé en ce que** le support de renforcement est un cordon de poly(p-phénylène-2,6-benzobisoxazole) ou un cordon hybride, contenant au moins un fil de poly(p-phénylène-2,6-benzobisoxazole).
